# EUROPEAN PATENT APPLICATION

(11) **EP 3 715 017 A1**
(43) Date of publication of application: **30.09.2020**
(21) Application number: 19164984.7
(22) Date of filing: 25.03.2019
(51) Int. Cl.: B22F 1/00, B22F 3/00, C22C 29/04, C22C 29/06, C22C 29/08, C22C 29/10, C22C 29/14, C22C 29/16, B33Y 70/00, B22F 3/10

(54) **ADDITIVE MANUFACTURING POWDER FOR A HARD METAL PART AND METHOD FOR MAKING THE POWDER**

(71) Applicant: Hilti Aktiengesellschaft, 9494 Schaan (LI)
(72) Inventor: Alveen, Patricia, 6820 Frastanz (AT); Moseley, Steven, 6820 Nenzing-Gurtis (AT); Carreño-Morelli, Efrain, 1950 Sion (CH); Cardoso, Kevin, 1950 Sion (CH); Rodríguez-Arbaizar, Mikel, 1950 Sion (CH)
(74) Representative: Hilti Aktiengesellschaft Corporate Intellectual Property

(57) **Abstract**

A powder for an additive manufacturing for a hard metal part comprises: particles containing at least a hard phase material. The particles additionally contain a metallic binder or the powder comprises additional particles consisting of metallic binder. The particles are at least partly covered by an organic binder.

## Description

### BACKGROUND OF THE INVENTION

The present invention relates to an additive manufacturing powder for a hard metal part and method for making the powder.

A hard metal, as well referred to as cemented carbide, consists of hard phase materials and metallic binders. Typical hard phase materials are hard constituents of carbides or nitrides, e.g. WC or TiC. A typical metallic binder is cobalt. Hard metals are useful in applications demanding for high hardness and high toughness. Examples of areas of application are percussive drill bits and chisels.

Manufacturing parts made of hard metal is based on powder-metallurgical processes. A green body is made from a mixture of the hard phase material and the metallic binder. The green body can be shaped to a form derived from the form of the hard metal part. The green body is sintered using a liquid phase sintering, i.e. at a temperature above the liquidus of the metallic binder. The metallic binder undergoes metallurgical reaction with the hard phase material which solidifies the green body into the hard metal part.

The area of application for drill bits and chisels sets high demands on the manufacturing of hard metals. A drill bit shall have a high hardness and a low porosity of the hard metal. Hard metals of high hardness have a high content of the hard phase material and a low content of the softer metallic binder. The porosity results from the transition of the green body into the sintered hard metal part. It shows that a low content of metallic binder has a tendency to result in a higher porosity of the sintered body. Techniques shaping the green body by use of press- or injection moulding tools are known to achieve a low porosity even for a low metallic content. The However, these techniques are expensive and geometrically inflexible.

The green body can be made by additive manufacturing as described in WO 2017/178319 A1. A powder containing the hard phase material and the metallic binder is presented. A binder jetting process sprays a binder in a pattern on a thin layer of the powder which forms a sheet of glued together powder for a given layer of the green body. After the binder is set, a next thin layer of powder is spread over the original layer, and the binder is sprayed in a pattern according to this next layer. When the printing of all layers is complete, the binder is cured at an increased temperature. The residual powder on which no binder has been sprayed on can be removed, e.g. brushed off. Thus, a shaped green body made of the hard phase and metallic binder is obtained. Afterwards, the green body is sintered. The publication addresses the complication of obtaining a body with low porosity.

### SUMMARY OF THE INVENTION

It is an objective to provide a manufacturing method that is less sensitive on the composition of raw materials and provides a high density even for a low content of metallic binder.

According to an aspect an additive manufacturing powder for a hard metal part comprises: particles containing at least a hard phase material. Metallic binder may be provided along with the particle, i.e. the particles may additionally contain the metallic binder, the metallic binder may be provided as additional particles consisting of the metallic binder, or both options. The particles, i.e. the particles comprising the hard phase material, are at least partly covered by an organic binder.

The organic binder is already distributed within the powder. Density and homogeneity of the powder are maintained during the additive manufacturing process. A low content of organic binder is already sufficient for forming a stable green body. Porosity due to the removal of the organic binder can be kept low.

According to one aspect of the invention the additive manufacturing powder can be employed with the following additive manufacturing process. A plurality of layers of the powder is spread across a powder bed. A printhead is moved across each layer of the powder as the respective layer of powder is on top of the powder bed. An activation solution is delivered from the printhead to each layer of the powder in a respective controlled two-dimensional pattern as the printhead moves across the respective layer of the powder on top of the powder bed. The activation solution actives the organic binder for consolidating the powder in an area of the two-dimensional pattern. The two-dimensional patterns are collectively defining a three-dimensional shape of a green body derived from the hard metal part. The green body is consolidated to the hard metal part by sintering the green body.

In contrast to the binder jetting process which adds a binder to the top layer, the inventive additive manufacturing does not alter the material composition within the top layer. Density and homogeneity of the powder is not adversely affected by the activation solution. The low viscosity activation solution easily penetrates the top layer without causing strain or rearrangement.

According to one embodiment the powder or the first particles of the powder have a medium grain size below 50 µm, e.g. below 32 µm, above 10 µm, e.g. 20 µm.

According to one embodiment the metallic binder is based on cobalt, e.g. at least 50 wt% cobalt, e.g. at least 75 wt% cobalt, e.g. pure cobalt. According to one embodiment the hard phase material is based on tungsten carbide, e.g. at least 75 % tungsten carbide, e.g. pure tungsten carbide.

According to an embodiment of the invention the green body made from additive manufacturing can be consolidated by the following steps. A hard metal powder is created which is based on a hard phase material and on a metallic binder. A content of the metallic binder in the hard metal powder ranges from 3 wt% to 20 wt%. The green body is preprocessed at a temperature below the solidus temperature of the metallic binder. Preferably, the temperature is 5°C to 150°C below liquidus temperature of the metallic binder. Afterwards, the green body is processed by a liquid phase sintering step, preferably at a temperature of 5°C to 200°C above the liquidus temperature of the metallic binder.

The pre-processing enhances the densification during the liquid phase sintering process. It shows to be particularly beneficial for green bodies made by additive manufacturing. The pre-processing lasts preferably at least for 15 minutes.

### BRIEF DESCRIPTION OF THE DRAWINGS

- Fig. 1: drill head
- Fig. 2: green body and sintered body of a drill head
- Fig. 3: phase diagram for tungsten carbide and 10 wt% cobalt
- Fig. 4: sintering cycle
- Fig. 5: setup for additive manufacturing
- Fig. 6: powder

### DETAILED DESCRIPTION OF ILLSTRUSTRATIVE EMBODIMENTS

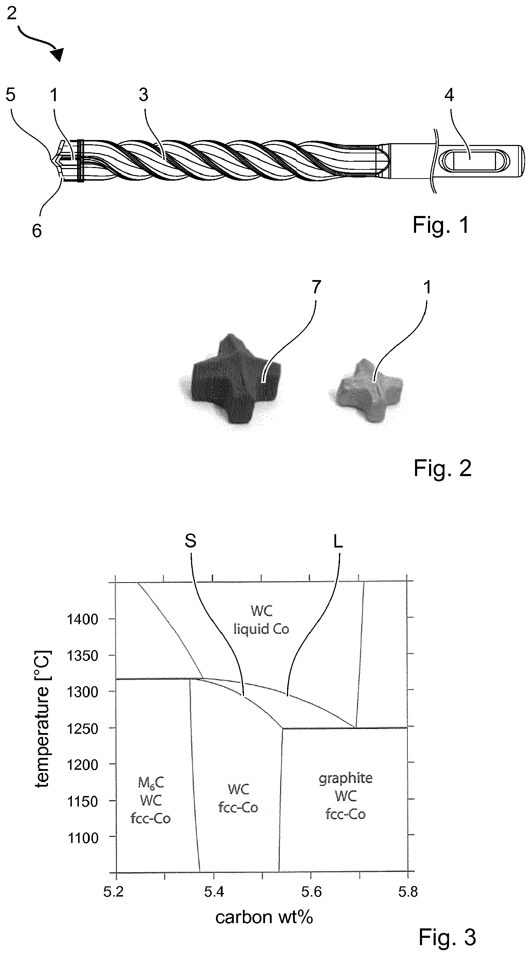

Parts made of hard material can sustain in abrasive environments due to their high hardness. Additionally, hard material is tough and resilient to impacts and heat unlike diamond. Further, hard material can be shaped to complex forms. An example for a field of use are drill heads **1.** A typical drill **2** for percussive drilling is illustrated in Fig. 1. The drill **2** has the drill head **1,** a shaft **3** and an insert end **4.** The drill head **1** has a tip **5** and blades **6** which are designed for an efficient breaking and drilling of undergrounds made of concrete, stone or similar material. The drill head **1** is hammered into the hard and abrasive underground and twisted at the same time. High quality hard materials with a hardness of more than 1350 HV10 are suitable for drill bits.

Hard metal is a metal matrix composite. Grains of hard phase material are embedded in a metallic binder. The metallic binder serves as a matrix of the hard phase material. A preferred example for a hard phase material is tungsten carbide. Tungsten carbide is nearly as hard as diamond and therefore well suited for working concrete and other mineral materials. A preferred metallic binder is cobalt. Hard metals based on a cobalt binder, in particular with tungsten carbide has hard phase material, have an overall good hardness. Drill heads 1 are made from tungsten carbide based hard metals.

The hard metal part, like the drill head **1,** can be manufactured by powder-metallurgical steps. Raw materials for the hard metal are provided as powder. The powder contains a hard phase material, e.g. tungsten carbide, and a metallic binder, e.g. cobalt. The metallic binder may contribute between 3 wt% to 20 wt% to the raw material of the hard metal. An organic binder is added to the powder of raw material. The organic binder serves to shape a green body in which the powder is evenly distributed. The green body can be shaped by moulding techniques or by additive manufacturing as outlined herein below. The shape of the green body is derived from the shape of the hard metal part. Shrinking and other deformations caused by later processing steps are taken into account. The green body is placed into a furnace. The organic binder is removed by a heating step at temperatures below 600°C, typically in the range between 400°C and 500°C. The organic binder can dissipate into the gas phase. Next, the green body is sintered to full density. The removal of the organic binder and the metallurgical reorganisation of raw material particles during the sintering can lead to pores within the hard metal part. The pores are a structural defect. A quality of the hard metal part is near absence of pores or equally density nearly equal the theoretical density of the hard metal. A density of at least 98 % of the theoretical value should be achieved for a drill head **1.** A green body **7** for a drill head **1** and the sintered drill head **1** are illustrated in Fig. 2. The sintering to full density is split in two steps: a high temperature pre-treatment step and a subsequent liquid phase sintering step. The furnace is heated to a temperature close but below the solidus temperature for the pre-treatment step. The temperature is preferably 5°C to 150°C below the solidus temperature (**S**). The solidus temperature specifies the temperature at which the metallic binder is completely solid. The solidus temperature can be looked up in phase diagrams typically available for common hard metal compositions (Fig. 3). For the example of a mixture of tungsten carbide, 12wt% cobalt and a range of 5.4 wt% to 5.55 wt% carbon, the solidus temperature ranges from 1325°C to 1275°C. The temperature is insufficient to promote a grain growth. However, the temperature enables a diffusion of metallic tungsten from the tungsten carbide. The metallic tungsten can diffuse into areas of higher carbon content which is believed to lower the melting point of the hard phase materials. A lower melting point is further believed to promote the densification during the liquid phase sintering. The pre-treatment step lasts for at least 15 minutes, e.g. up to 4 hours. Afterwards, the furnace is heated to a temperature above the liquidus temperature (**L**). The temperature is preferably at least 5°C above, preferable at the most 200°C above the liquidus temperature. The liquidus temperature specifies the temperature at which the metallic binder is completely liquid. For the above given exemplary mixture, the liquidus temperature ranges from 1325°C to 1310°C. The liquid phase sintering lasts for at least 15 minutes, e.g. less than 4 hours. Grain boundaries are growing during the liquid phase sintering step leading to a densification of the body. The pre-treatment improves the densification during the liquid phase sintering step.

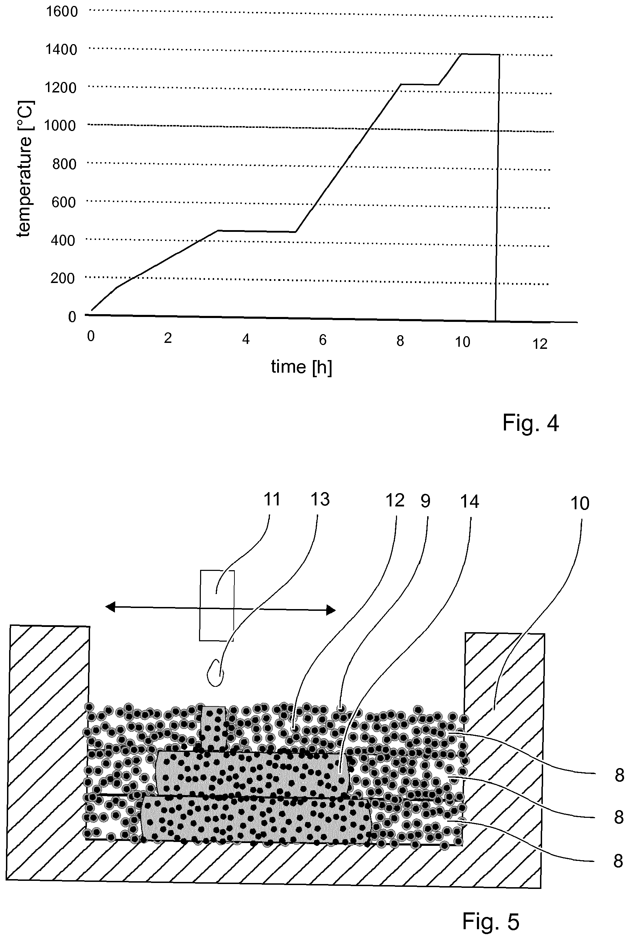

An example for a sintering cycle is illustrated in Fig. 4. A green body is made of tungsten carbide and cobalt. The cobalt content is 17 wt%. The green body is made by the below additive manufacturing process. The green body is placed in a furnace. An atmosphere in the furnace consists of argon and/or hydrogen. The furnace can be flushed with argon and hydrogen in order to remove gases evaporating from the green body during the sintering cycle. The furnace is slowly heated to a temperature of 450°C with a rate of 2°C per minute for a debinding step. The temperature is sufficient for removing the organic binder. The debinding step lasts for approximately 2 hours. The furnace is heated to reach about 1245°C for the pre-treatment step. The green body is pre-sintered for about 1 hour. Next, the furnace is heated to 1400°C for the liquid phase sintering. The sintering lasts about 1 hour. Optionally, a hot isostatic pressing can follow the sintering.

An additive manufacturing process for making a green body suitable for a sintering process is described below. A density above 98% can be achieved as required for drill heads **1.** The additive manufacturing process grows a green body by adding subsequently layer **8** by layer. Each layer is two-dimensionally shaped according to a pattern for each respective layer. The two-dimensional patterns are derived from cross-sections through the green body or hard metal part in a design phase. The two-dimensional patterns are defining together in good approximation the shape of the green body. The thickness of the layers or distance of neighbouring cross-sections limits the resolution of the shape.

Each layer is made from a powder **9.** The powder is spread onto a powder bed **10.** The powder contains the hard phase material and the metallic binder. In addition, the powder contains an organic binder. Examples of organic binders are polyvinyl butyral (PVB), polyvinyl alcohol (PVA), polyethylene glycol (PEG), poly(ethylene methacrylate) (PMMA). The powder has a fine granularity and the materials are homogenously dispersed. A dispenser spreads the powder onto the powder bed. The layer has a constant thickness. A thickness is preferably in the range of 10 µm to 40 µm. A printhead **11** is moved over the surface of top layer **12.** The printhead **11** sprays an activation solution **13** on the top surface **12** according to the two-dimensional pattern for this layer. The activation solution contains a solvent for the organic binder. The solvent is adapted to the organic binder. Examples for solvents are water, alcohol, butanol, isopropanol, hexane, heptane, acetone or other organic solvents. The solution dissolves at least partly the organic binder in the powder. As the solvent evaporates the organic binder **14** glues together neighbouring particles of the powder. The powder consolidates in the area where the activation solution has been sprayed on, i.e. according to the two-dimensional pattern. A thickness of the layer is chosen such that the activation solution reaches the layer below to ensure a connection of the neighbouring layer based on the two-dimensional patterns. The powder bed can be heated to control the evaporation of the solvent. A next layer of the powder is spread on the consolidated layer. The process is repeated for all layers of the green body. Afterwards, the green body is cleaned from excess powder onto which no activation solution has been sprayed on. The excess powder can be removed by air or brush.

A preferred recipe and granulation process for a powder is given by example. The powder contains first particles containing pre-sintered hard metal and second particles consisting of metallic binder. The hard metal has tungsten carbide as hard phase material and cobalt as metallic binder. The weight ratio of the metallic binder to the hard metal is 12 wt%. The additional metallic binder in form of the second particles consists of cobalt. Its weight content corresponds to 6.5 wt% of the hard metal. The overall content of cobalt is 17.7 wt%.

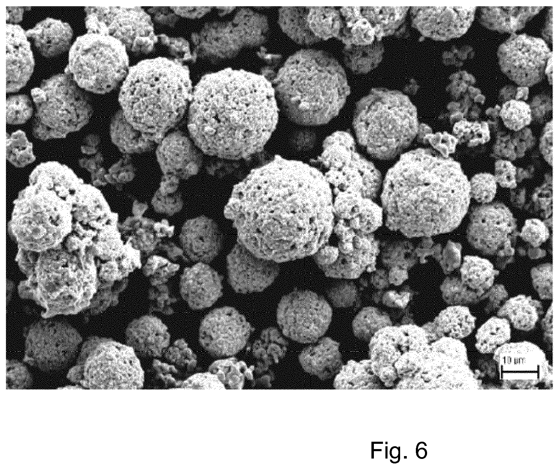

Polyvinyl butyral (PVB) is dissolved in a solvent. PVB will have the role of the organic binder. The solution is heated to 50°C and stirred until PVB is completely dissolved. For the given example, 27 g of PVB are dissolved in 300 ml of solvent. The first particles, i.e. the hard metal powder, is added to the solution. The solution is mixed for a homogenous distribution of the powder. The solution is heated and continuously stirred. The solvent evaporates. Rough granules are forming. The granules are dried in order to completely remove the solvent. The dry granules are grinded and sieved until the granules predominantly have a mean size in the range of 20 to 32 µm. The granules may be equally created by spray draying, bed **10** fluidized drying, freeze drying or flash drying. Different sieving steps may be applied, e.g. air classifying, inert gas classifying, jet mill classifying, cryogenic mill classifying, etc.. Due to the process the first particles are at least partly coated with the organic binder. The second particles, i.e. the additional metallic binder, are added and mixed with the powder. The weight ratio of the first particles and second particles of this example s 15:1. The weight of the organic binder contributes to less than 2.5 wt%. A microscopy image of the powder is shown in Fig. 6. The additional metallic binder has a low tendency to agglomerate. A good homogeneity of the powder is obtained. An alternative formation mixes the first particles and the second particles. Both particles are added to the solution of the organic binder. The second particles of the pure metallic binder tend to agglomerate. The additional metallic binder has a higher tendency to agglomerate. It has shown favourable to add additional metallic binder as separate powder in addition to the pre-sintered hard metal. The additional metallic binder improves the densification by several percentage points, in particular for a low content of metallic binder. According to another recipe, the first particles do not contain metallic binder. The metallic binder is purely added as second particles which, in contrast to the first particles, are preferably not covered with the binder **14.** The relation of hard phase material and metallic binder is chosen according to the illustration of Fig. 6. The content of the metallic binder can be less than 20 wt%, preferably more than 3 wt%, for other recipes. The content of the organic binder **14** remains typically below 2.5 wt% which is sufficient for the additive manufacturing process.

The above examples have referred to tungsten carbide as hard phase material which is preferred for drill heads **1.** Other hard phase materials are titan carbide, titan nitride, titan carbonitride, niobium carbide, tungsten tetra boride. The above examples referred to cobalt as metallic binder. Other metallic binders are nickel, iron, molybdian, chromium or combinations thereof.

## Claims

1. Additive manufacturing powder for a hard metal part, comprising particles containing at least a hard phase material
the particles additionally contain a metallic binder or the powder comprises additional particles consisting of metallic binder,
wherein the particles are at least partly covered by an organic binder.

2. Additive manufacturing powder according to claim 1 wherein the hard phase material consists of tungsten carbide, titan carbide, titan nitride titan carbonitride, niobium carbide, tungsten tetra boride or a combination thereof, and the metallic binder consists of cobalt, nickel, iron, molybdenum, chromium or a combination thereof, and wherein a content of the metallic binder in the hard metal powder ranges from 3 wt% to 20 wt%.

3. Additive manufacturing powder according to claim 1 or 2 wherein the organic binder is based on polyvinyl butyral, polyvinyl alcohol, polyethylene glycol, polyethylene methacrylate.

4. Method of making an additive manufacturing powder for a hard metal part comprising the steps:
dissolving an organic binder in a solution,
mixing particles containing a hard metal phase into the solution,
drying the solution,
forming first particles of the powder from the dried solution.

5. Method of making an additive manufacturing powder according to claim 4 comprising the step:
adding particles of the metallic binder as second particles to the powder.

6. Additive manufacturing according to claims 4 to 5
wherein the organic binder contributes to the less than 2.5 wt% of the first particles.

7. Additive manufacturing according to claims 4 to 6
wherein the granules containing the hard metal phase contain the hard phase material pre-sintered with the metallic binder.

8. Additive manufacturing according to claims 4 wherein the solvent is based on water or an organic solvent.

9. Additive manufacturing according to claim 8 wherein the organic solvent is based on polyvinyl butyral, polyvinyl alcohol, polyethylene glycol, poly(ethylene methacrylate).
